# EUROPEAN PATENT SPECIFICATION

(11) **EP 3 681 432 B1**
(45) Date of publication and mention of the grant of the patent: **31.07.2024**
(21) Application number: 17768421.4
(22) Date of filing: 12.09.2017
(51) Int. Cl.: A61C 13/00

(54) **BLANK AND METHOD FOR THE MANUFACTURE OF AT LEAST ONE MOLDED PART**
ROHLING UND VERFAHREN ZUR HERSTELLUNG MINDESTENS EINES FORMTEILS
ÉBAUCHE ET PROCÉDÉ DE PRODUCTION D'AU MOINS UNE PIÈCE MOULÉE

(43) Date of publication of application: 22.07.2020
(60) Divisional application: 21212268.3
(73) Proprietor: DeguDent GmbH, 63457 Hanau (DE); Dentsply Sirona Inc., York, PA 17401 (US)
(72) Inventor: VÖLKL, Lothar, 63773 Goldbach (DE); FECHER, Stefan, 63867 Johannesberg (DE); GEBHARDT, Andreas, 63505 Langenselbold (DE)
(74) Representative: Pichova, Vanda
(86) International application number: PCT/EP2017/072845
(87) International publication number: WO 2019/052628

(56) References cited:
- EP-A1- 0 807 422
- EP-A2- 2 016 922
- EP-A2- 2 016 922
- WO-A1-2013/167903
- WO-A1-2013/167903
- DE-A1- 102011 055 393
- DE-A1- 102011 055 393
- US-A1- 2013 221 554

## Description

### FIELD OF THE INVENTION

The invention relates to a blank for the manufacture of at least one molded body, in particular a dental reconstruction.

The invention also embraces a method for the production of at least one molded part, in particular a dental restoration, or a section thereof through material-removing processing of said blank.

### BACKGROUND OF THE INVENTION

Blanks, made of ceramic materials have been successfully applied for manufacturing molded bodies, in particular dental restorations through material-removing machining using multi-axis machine tools such as milling machines. Blanks consisting of other materials, such as plastics, composites or metals, are also used for that purpose.

To produce high-precision molded parts by CAD/CAM methods it is necessary to take the wear of the machining tool into consideration. In the prior art blanks are machined in such a way that the tool is fed in an axial direction. This results in a high load on the tool and thus to wear, which means that it is necessary to change the tool frequently.

WO 2013/167903 A1 discloses a method of manufacturing an article, comprising taking an article formed in an initial state via an additive manufacturing process and performing a second manufacturing process to transform the article into a second state, which comprises mounting the article in a holding device, processing at least one first feature on the article, which comprises processing at least one set of mounting features on the article, re-mounting the article via the at least one set of mounting features, and then processing at least one second feature on the article.

DE 10 2011 055393 A1 discloses a method for producing a plastic artificial resin blank (having a plurality of different color layers, which is introduced in a mold under pressure, characterized in that the blank consists of a thermoplastic material and in a multi-component injection molding process into a first cavity in a first plastic layer with a first pigmentation is introduced into an injection mold and at least one further plastic layer of the same plastic with a lighter pigmentation with respect to the first plastic layer is introduced into at least one second cavity in the injection mold, wherein the first plastic layer on the side on which the second plastic layer is applied, at least partially formed with a profile and / or a structure and on the other side has a homogeneous surface.

EP 2 016 922 A2 discloses a blank for making artificial tooth parts has a body which is shaped by removing material from it and fasteners for mounting the blank in a machining device. The body has a reinforced region (8) with a higher break strength than its machinable region (C). Also claimed are (i) the preparation of artificial tooth parts from blanks, using the reinforced region to create the reinforcing structure in the occlusal area of the tooth part and (ii) the preparation of the blanks by bonding layers (B) and (C) together to form a laminated composite.

### SUMMARY OF THE INVENTION

An object of the present invention is to provide a blank that allows the wear on the tool to be reduced when the blank is machined. A further object is to enable optimal usage of the material considering the shape of the desired molded part.

Moreover, a method for the production of a molded body is presented which is characterized by a reduction in the wear of the tool.

The invention is defined in independent claims 1 and 21.

To achieve the aim a blank is proposed which consists essentially of a base and regions that emanate therefrom and project above the base, from which the molded body or at least a part of it can be obtained. The blank comprises a plurality of regions projecting either above one side of the base or above both sides of the base.

In contrast to the prior art, the blank does not have a disc geometry or cuboid geometry with uniform thickness that does not vary, but rather comprises a carrier layer that forms the base and regions that emanate and project therefrom, to yield the advantage that the material requirement for the blank is reduced so that molded parts can be produced at lower cost, in particular dental reconstructions such as bridges, frameworks, crowns, caps, veneers, inlays or onlays.

In addition to material savings there is further the advantage that right from the start of the machining operation regions can be machined from their sides, i.e., relative movement in a transverse direction between the tool's axis of rotation and the projecting region, in particular perpendicular to the axis of rotation, is possible. This results in a lower load on the tool so that wear is reduced.

The at least one region projecting above the base has preferably one of the following geometries - cuboid, cylindrical, conical or curved shape. The different geometries enable an optimal adaptation to the shape or geometries of the molded bodies to be produced. Thus for the production of dental reconstructions regions can project from the base that are different in terms of area to such an extent that from a single blank, molded bodies of different geometries can be derived through material-removing working , with optimal material usage.

In particular it is provided for the base to have a thickness B where B ≤ 10 mm, preferably B ≤ 5 mm, in particular 1.5 mm ≤ B ≤ 4 mm.

In a further development of the invention the ratio of the thickness B of the base to the height H of the region projecting above the base is 1:15 ≤ B:H ≤ 1:1, in particular 1:10 ≤ B:H ≤ 1:6.

In terms of area the regions have dimensions that enable the production of a dental framework, a crown, a partial crown, a bridge, a dental arch, a cap, a veneer, an abutment, a pin construction, an inlay and/or an onlay.

In a preferred embodiment the blank or at least a region of it comprises or contains at least one material from the group of ceramic materials such as zirconium dioxide, glass ceramic, feldspar ceramic, metallic materials such as titanium, CoCr alloy, organic materials such as thermoplastic material, in particular PMMA or PEEK, composite materials, glass fiber-reinforced plastic.

The blank is preferably made from zirconium dioxide to which yttrium oxide (Y₂O₃), calcium oxide (CaO), magnesium oxide (MgO) and/or cerium oxide (CeO₂), in particular yttrium oxide, has been added.

Further, there is the possibility of producing dental prostheses in particular which in terms of color gradation, or in terms of their material properties, correspond to a natural tooth. The invention is therefore characterized in that the at least one region projecting above the base, optionally incorporating the materials of the base, comprises sections that differ in terms of their material properties, such as strength and/or translucency and/or coloration and/or fluorescence.

There is no departure from the invention if the base is made from a material that is different from that of the regions from which the molded bodies are derived. So, for example, the base material may be a plastic. The base can have openings in which the regions, for instance, are glued in. However, there is also the possibility that the regions are surrounded by the base material during manufacturing of the base by e.g. injection molding. Corresponding to the thickness of the base the regions are lamellar enclosed by the base material.

The invention relates also to a method for the production of at least one molded body, in particular a dental restoration, or a section thereof through machining by material-removing from a region of a blank that projects from a base, wherein the machining commences through removal of material from the circumferential surface of the region.

It is thereby in particular provided for the machining to be carried out using a milling tool that has an axis of rotation and that at least at the beginning of material removal there is a relative movement between the milling tool and the region transverse, preferably perpendicular, to the axis of rotation.

The blank itself can be produced through pressing, casting, additive methods, forming or mechanical working methods.

Particularly, use is made of a blank with a base from which a number of regions emanate, wherein the regions are separated by a section of the base.

Further details, advantages and features of the invention may be derived not only from the claims, and the features to be taken from them - either alone and/or in combination - but also from the examples described below and illustrated by drawings.

### BRIEF DESCRIPTION OF THE DRAWINGS

### Figures:

- Fig. 1: A top view of a first embodiment of a blank,
- Fig. 2: A section along the line D-D in Fig. 1,
- Fig. 3: The blank according to Fig. 1 viewed from the bottom,
- Fig. 4: A top view of a second embodiment of a blank,
- Fig. 5: A section along the line A-A in Fig. 4,
- Fig. 6: The blank according to Fig. 4 viewed from the bottom,
- Fig. 7: A further embodiment of a blank, and
- Fig. 8: A section along the line A-A in Fig. 7.

### DETAILED DESCRIPTION OF THE INVENTION

The teaching according to the invention is described in more detail with reference to the figures, on the basis of which molded bodies, in particular dental molded parts, can be produced in a material-saving manner from blanks, in particular through milling. At the same time this yields the advantage that the wear on the tool used for machining of the blank can be reduced.

The blanks can preferably comprise ceramic materials such as zirconium dioxide, glass ceramic, feldspar ceramic, to name just a few ceramic materials.

The blanks may in particular be of zirconium dioxide to which yttrium oxide, calcium oxide, magnesium oxide and/or cerium oxide is added, but in particular yttrium oxide stabilized zirconia.

Suitable materials also include metallic materials such as titanium or CoCr alloys.

The blanks may also be made from organic materials, optionally filled, in particular thermoplastic materials such as polymethylmethacrylate (PMMA) or polyetheretherketone (PEEK).

Composite materials or glass fiber-reinforced plastic are also possible.

Disc-shaped blanks are generally used to manufacture dental molded bodies / reconstructions through material-removing working. The dental restorations can be in the form of dental frameworks, crowns, partial crowns, bridges, caps, veneers, abutments, pin constructions, inlays and/or onlays or dental arches, but this is by no means an exhaustive list. A plurality of corresponding molded bodies may be obtained, depending on the diameter of the blanks.

Previously known blanks exhibit a uniform thickness across the regions from which the molded bodies are obtained through machining. A disadvantage here is that there are relatively high material losses since the material between the individual molded bodies is not utilized. A further particular disadvantage here is that the milling tool rotating about an axis of rotation and moving in the direction of the axis of rotation at least at the start of the processing of a molded part removes material from the blank with only a small part of the tool surface so that there is a high load on the tool. The wear is consequently relatively high.

All of these disadvantages are avoided with the blanks according to the invention.

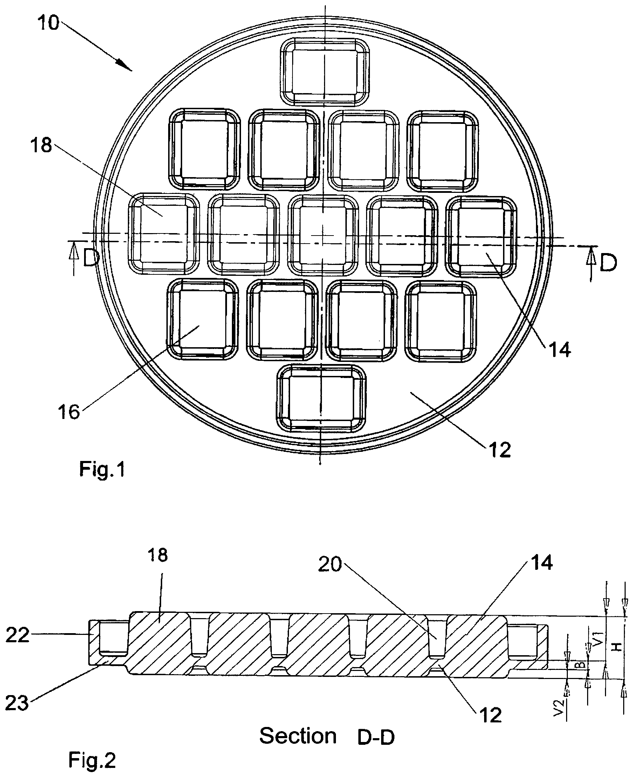

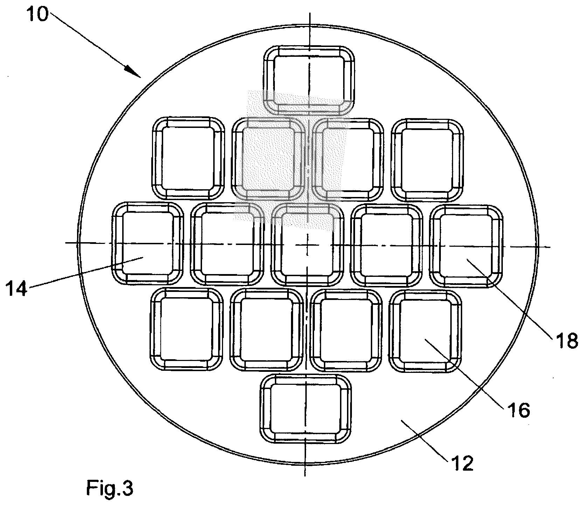

Figures 1 to 3 thus show a first embodiment of a disc-shaped blank 10 that in the diagrams has a circular geometry, which has regions of different thickness.

Thus the blank 10 in principle comprises a base 12 and regions that emanate therefrom, indicated by way of example by the reference numbers 14, 16 and 18. In the exemplary embodiment the regions 14, 16, 18 do not just project above one side of the base 12, but rather extend on both sides, as clearly shown in the sectional view in Fig. 2. This, however, is not a required characteristic. Rather, the invention relates also to a blank wherein regions project only from one side of the base.

The height of the regions 14, 16, 18 is aligned with the molded bodies to be produced.

To obtain desired molded bodies from the regions 14, 16, 18, it is possible due to the space between the regions 14, 16, 18 that a machining tool acts from the side on the elevated regions 14, 16, 18, i.e., a relative movement to the elevation 14, 16, 18 substantially perpendicular to the axis of rotation of the tool is achieved. This possibility relates not just to the regions 14, 16, 18, that are arranged in the perimeter of the blank 10, but also to the regions surrounded by a plurality of projecting regions, as there is a distance between these, as can be seen in the sectional view of Figure 2. A corresponding distance is indicated by way of example by the reference number 20.

In particular the invention provides for the elevated regions 14, 16, 18 emanating from the base to extend non-symmetrically on both sides of the base, so that without change to holders, that normally accommodate blanks with the usual milling machines, blanks according to the invention can be fixed in a processing machine. For this purpose a circumferential border 22 is provided in the exemplary embodiment which limits the blank 10 peripherally. In this example the edge 22 has an L-shaped cross-section and may be an integral part of the blank 10. The edge 22 can of course also be a separately-produced element that is connected to the blank, i.e., in particular with the base 12, for instance through gluing.

As can be seen from the sectional view in Figure 2, the base 12 has a thickness B that is preferred in the range 1 to 10 mm, in particular between 1 mm and 5 mm, and especially preferred in the range 1.5 mm to 3 mm. The region 14, 16, 18 projecting above the upper side of the base 12 has a height V1 and the region projecting from the underside of the base 12 has a height V2. V1 + V2 + B should preferably lie between 15 mm and 25 mm. In particular the ratio of the thickness B of the base 12 to the total height H (= V1 + V2 + B) of the particular region 14, 16, 18 should be 1:15 to 1:1, in particular 1:10 ≤ B:H ≤ 1:6.

From the bottom view of the blank 10 it is similarly clear that the regions 14, 16, 18 project above the base 12.

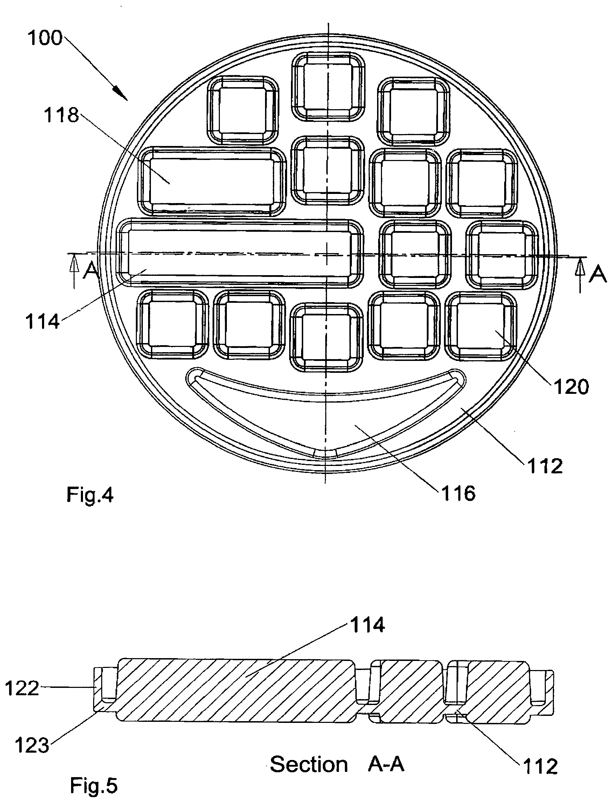

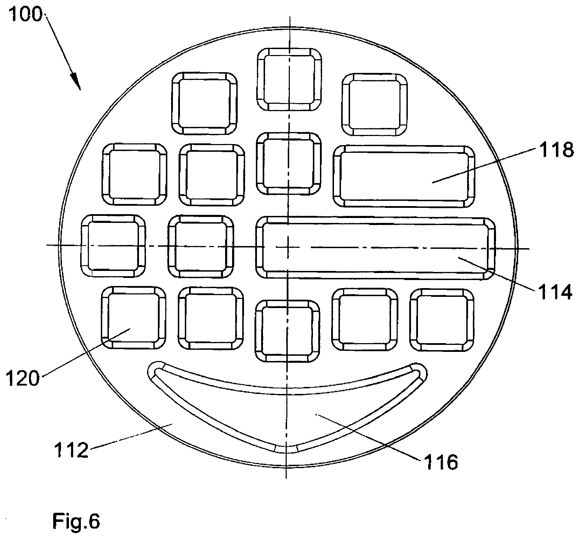

The exemplary embodiment shown in Figures 4 to 6 differs from that in Figures 1 to 3 in that the blank 100, which also has a circular geometry, has regions that extend differently in terms of area. By way of example, four regions 114, 116, 118 and 120 are indicated. The regions 114, 116, 118, 120 extend - as with the embodiment illustrated by Figures 1 to 3 - on both sides of a base 112, as can be seen in the sectional view A-A (Fig. 5). The blank 100 and thus the base 112 are also delimited by a circumferential edge 122. The description for Figures 1 to 3 applies here too.

Since regions of different area extend from the base 112, it follows that molded bodies of different geometries and sizes can be obtained. For example, a four to five unit bridge can be machined from the region 114, a front dental arch from the region 116, a three unit bridge from the region 118 and from the other equally dimensioned regions 120 single tooth restorations such as inlays, onlays, crowns etc. can be machined.

The same advantages, as described above, are also seen for the blank 100, in particular the material savings and the lower wear of the rotating tool, since the projecting regions 114, 116, 118, 120 can be approached from the side, i.e., transversely or perpendicularly to the axis of rotation.

The teaching according to the invention enables material to be spared. This saving may be up to 40% if, for example, the base 12, 112 has a thickness of 2 mm and the total thickness of the blank, in the regions from which the projections 14, 16, 18, 114, 116, 118, 120 emanate from the base 12, 112, is 18 mm.

As mentioned already, the blanks 10, 100 according to the invention, as well as blanks of uniform thickness, can be held in the usual holders since it is not necessary to change the profile and the dimensions of the edge 22, 122. Thereby, the limb 23, 123 of the edge 22, 122, which extends parallel to the plane defined by the blank 10, 100 and which in the sectional views extends horizontally, is an extension of the base 12, 112, as can be seen in the sectional views.

The blanks 10, 100 can be produced, for example, through additive methods by pressing, casting, forming or mechanical manufacturing methods.

It is also possible for the material of the blank at least in the region of the elevations 14, 16, 18, 114, 116, 118, 120 in particular over its height to have a different composition /different material characteristics to, for instance, obtain a color gradation that corresponds to that of natural teeth for the crowns or bridges, produced.

It is also possible to make regions comprising different material layers so that a dentine core is formed. Different translucency, strength and/or fluorescence can be generated over the height of the particular region 14, 16, 18, 114, 116, 118, 120 depending on the materials.

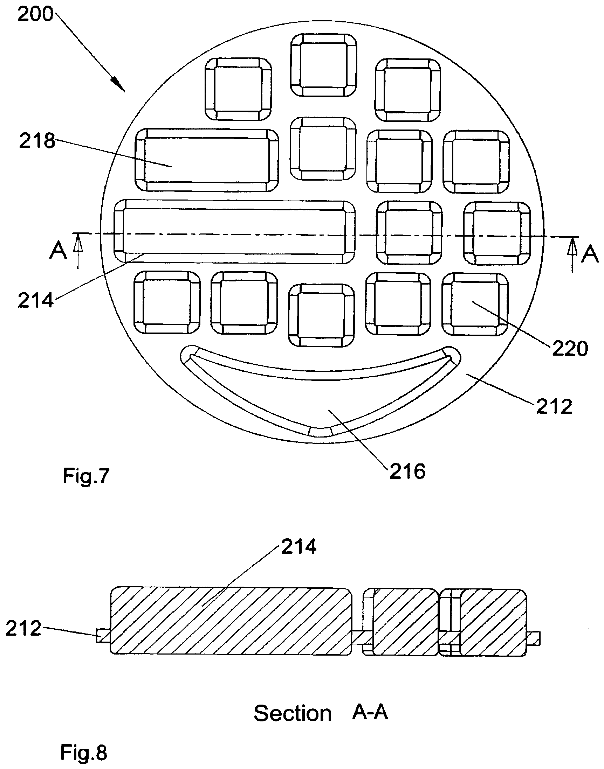

The exemplary embodiment according to Figures 7 and 9 differs from that of Figures 1 to 6 in that the elevated regions to be worked 214, 216, 218, 220 emanate from a base 212 that is made from a material different from that of the regions 214, 216, 218, 220. The base 212 virtually forms a carrier that has recesses in which the elevated regions to be worked 214, 216, 218, 220 are fixed, for instance through gluing. It is also possible for the base to be produced through injection molding, wherein the elevated regions 214, 216, 218, 220 are surrounded by a base material layer corresponding to the thickness of the base 212. Plastics in particular are suitable materials for the base 112, i.e., the carrier.

## Claims

1. A blank (10) for the production of a molded body, wherein the blank has a base (12) and regions(14, 16, 18) that emanate therefrom and project above the base, from which at least a part of the molded body can be derived by working, and wherein the base is of a material different from that of the regions, the regions being glued into openings in the base, wherein at least one region projecting above the base and the base comprise sections of different strength, translucency, color, and/or fluorescence, **characterized in that** the at least one region projects above both sides of the base.

2. The blank according to claim 1, wherein the molded body is a dental reconstruction.

3. The blank according to claim 1 or 2, wherein the base has a disc geometry over which a plurality of regions project.

4. The blank according to any one of claims 1 to 3, wherein the base is limited by one edge projecting above the base, which is manufactured integrally with the base or is an element connected to the base.

5. The blank according to claim 4, wherein the edge is a circumferential edge.

6. The blank according to claim 4 or 5 , wherein the element connected to the base is an adapter.

7. The blank according to any one of claims 1 to 6, wherein the at least one region has a geometry selected from the group consisting of cuboid, cylindrical, conical or scythe shape.

8. The blank according to any one of claims 1 to 7 , wherein the base has a thickness B where B ≤ 10 mm.

9. The blank according to claim 8 , wherein B ≤ 5 mm.

10. The blank according to claim 9, wherein 1.5 mm ≤ B ≤ 4 mm.

11. The blank according to any one of claims 1 to 10, wherein the ratio of thickness B of the base to the height H of the region projecting above the base is 1:15 ≤ B:H ≤ 1:1.

12. The blank according to claim 11, wherein 1:10 ≤ B:H ≤ 1:6.

13. The blank according to any one of claims 1 to 12, wherein a plurality of regions having different geometries project above the base.

14. The blank according to any one of claims 1 to 13, wherein the regions have dimensions for the manufacture of a dental framework, a crown, a partial crown, a bridge, a dental arch, a cap, a veneer, an abutment, a pin construction, an inlay and/or an onlay.

15. The blank according to any one of claims 1 to 14, wherein the blank and/or the at least one region comprises or contains a material selected from the group consisting of a ceramic material, a metallic material, an organic material, a composite material or a glass fiber-reinforced plastic.

16. The blank according to claim 15, wherein the ceramic material is zirconium dioxide, glass ceramic, or feldspar ceramic; or the metallic material is titanium or CoCr alloy; or the organic material is a thermoplastic material.

17. The blank according to claim 16, wherein the thermoplastic material is PMMA or PEEK.

18. The blank according to any one of claims 1 to 17, wherein the at least one region projecting above the base comprises sections of different material compositions.

19. The blank according to any one of claims 1 to 17, wherein the at least one region projecting above the base and the base comprise sections of different material compositions.

20. The blank according to claim 18 or 19, wherein the sections of different material compositions are sections of ceramic materials of different compositions.

21. A method for the manufacture of at least one molded body through machining by material-removing of a region (14, 16, 18) projecting above the base (12) of a blank (10) as defined in any one of claims 1 to 20, wherein the machining commences through removal of material from a circumferential surface of the region, wherein the regions are separated by a section of the base.

22. The method according to claim 21, wherein the at least one molded body is a dental restoration or part thereof.

23. The method according to claim 21 or 22, wherein the machining is carried out using a milling or grinding tool that has an axis of rotation and that at least at the start of the material removal there is a relative movement between the milling or grinding tool and a region transverse to the axis of rotation.

24. The method according to claim 23, wherein the relative movement is between the milling or grinding tool and a region perpendicular to the axis of rotation.

25. The method according to any one of claims 21 to 24, wherein the blank is manufactured through pressing, casting, additive processes, forming or mechanical manufacturing methods.

## Patentansprüche

1. Rohling (10) für die Herstellung eines Formkörpers, wobei der Rohling eine Grundfläche (12) und Regionen (14, 16, 18) aufweist, die daraus hervorgehen und über die Grundfläche hinausragen, von denen mindestens
ein Teil des Formkörpers durch Arbeiten abgeleitet werden kann, und wobei die Grundfläche aus einem Material ist, das sich von dem der Regionen unterscheidet, wobei die Regionen in Öffnungen in der Grundfläche geklebt sind,
wobei mindestens eine Region über die Grundfläche hinausragt und die Grundfläche Abschnitte unterschiedlicher Stärke, Transluzenz, Farbe und/oder Fluoreszenz umfasst, **gekennzeichnet dadurch, dass** die mindestens eine Region über beide Seiten der Grundfläche hinausragt.

2. Rohling nach Anspruch 1, wobei der Formkörper eine Dentalrekonstruktion ist.

3. Rohling nach Anspruch 1 oder 2, wobei die Grundfläche eine Scheibengeometrie aufweist, über die eine Vielzahl von Regionen hinausragen.

4. Rohling nach einem der Ansprüche 1 bis 3, wobei die Grundfläche durch eine über die Grundfläche hinausragende Kante, die einstückig mit der Grundfläche gefertigt oder ein mit der Grundfläche verbundenes Element ist, begrenzt ist.

5. Rohling nach Anspruch 4, wobei die Kante eine umlaufende Kante ist.

6. Rohling nach Anspruch 4 oder 5, wobei das mit der Grundfläche verbundene Element ein Adapter ist.

7. Rohling nach einem der Ansprüche 1 bis 6, wobei die mindestens eine Region eine Geometrie aufweist, die ausgewählt ist aus der Gruppe bestehend aus quaderförmiger, zylindrischer, konischer oder sichelförmiger Form.

8. Rohling nach einem der Ansprüche 1 bis 7, wobei die Grundfläche eine Dicke B aufweist, wobei B ≤ 10 mm ist.

9. Rohling nach Anspruch 8, wobei B ≤ 5 mm ist.

10. Rohling nach Anspruch 9, wobei 1,5 mm ≤ B ≤ 4 mm ist.

11. Rohling nach einem der Ansprüche 1 bis 10, wobei das Verhältnis der Dicke B der Grundfläche zur Höhe H der Region, die über die Grundfläche hinausragt, 1:15 ≤ B:H ≤ 1:1 ist.

12. Rohling nach Anspruch 11, wobei 1:10 ≤ B:H ≤ 1:6 ist.

13. Rohling nach einem der Ansprüche 1 bis 12, wobei eine Vielzahl von Regionen mit unterschiedlichen Geometrien über die Grundfläche hinausragen.

14. Rohling nach einem der Ansprüche 1 bis 13, wobei die Regionen Maße für die Fertigung eines Dentalgerüsts, einer Krone, einer Teilkrone, einer Brücke, eines Dentalbogens, einer Kappe, einer Verblendung, eines Abutments, einer Stiftkonstruktion, eines Inlays und/oder eines Onlays aufweisen.

15. Rohling nach einem der Ansprüche 1 bis 14, wobei der Rohling und/oder die mindestens eine Region ein Material umfassen oder enthalten, das ausgewählt ist aus der Gruppe bestehend aus einem Keramikmaterial, einem Metallmaterial, einem organischen Material, einem Kompositmaterial oder einem glasfaserverstärkten Material.

16. Rohling nach Anspruch 15, wobei das Keramikmaterial Zirkoniumdioxid, Glaskeramik oder Feldspatkeramik ist, oder das Metallmaterial Titan oder eine CoCr-Legierung ist; oder das organische Material ein thermoplastisches Material ist.

17. Rohling nach Anspruch 16, wobei das thermoplastische Material PMMA oder PEEK ist.

18. Rohling nach einem der Ansprüche 1 bis 17, wobei die mindestens eine Region, die über die Grundfläche hinausragt, Abschnitte unterschiedlicher Materialzusammensetzungen umfasst.

19. Rohling nach einem der Ansprüche 1 bis 17, wobei die mindestens eine Region, die über die Grundfläche hinausragt, und die Grundfläche Abschnitte unterschiedlicher Materialzusammensetzungen umfassen.

20. Rohling nach Anspruch 18 oder 19, wobei die Abschnitte unterschiedlicher Materialzusammensetzungen Abschnitte aus Keramikmaterialien unterschiedlicher Zusammensetzungen sind.

21. Verfahren für die Fertigung mindestens eines Formkörpers durch Bearbeitung mittels Materialabtragen von einer Region (14, 16, 18), die über die Grundfläche (12) eines Rohlings (10), wie in einem der Ansprüche 1 bis 20 definiert, hinausragt,
wobei die Bearbeitung mit der Abtragung von Material von einer umlaufenden Fläche der Region beginnt, wobei die Regionen durch einen Abschnitt der Grundfläche getrennt sind.

22. Verfahren nach Anspruch 21, wobei der mindestens eine Formkörper eine Dentalrestauration oder ein Teil derselben ist.

23. Verfahren nach Anspruch 21 oder 22, wobei das Bearbeiten mittels eines Fräs- oder Schleifwerkzeugs durchgeführt wird, das eine Rotationsachse aufweist und das mindestens zu Anfang der Materialabtragung eine relative Bewegung zwischen dem Fräs- oder Schleifwerkzeug und einer Region quer zur Rotationsachse aufweist.

24. Verfahren nach Anspruch 23, wobei die relative Bewegung zwischen dem Fräs- oder Schleifwerkzeug und einer Region senkrecht zur Rotationsachse erfolgt.

25. Verfahren nach einem der Ansprüche 21 bis 24, wobei der Rohling durch Pressen, Gießen, additive Prozesse, Formen oder mechanische Fertigungsmethoden gefertigt wird.

## Revendications

1. Ébauche (10) pour la production d'un corps moulé, dans laquelle l'ébauche possède une base (12) et des régions (14, 16, 18) qui en émanent et qui font saillie au-dessus de la base, à partir de laquelle au moins
une partie du corps moulé peut être dérivée par travail, et où la base est d'un matériau différent de celui des régions, les régions étant collées dans les ouvertures de la base,
où au moins une région fait saillie au-dessus de la base et où la base comprend des sections de force, de translucidité, de couleur et/ou de fluorescence différentes, **caractérisée en ce que** ladite au moins une région fait saillie au-dessus des deux côtés de la base.

2. Ébauche selon la revendication 1, où le corps moulé est une reconstruction dentaire.

3. Ébauche selon la revendication 1 ou 2, où la base a une géométrie de disque au-dessus de laquelle une pluralité de régions font saillie.

4. Ébauche selon l'une des revendications 1 à 3, où la base est limitée par un bord en saillie au-dessus de la base, qui est fabriqué intégralement avec la base ou qui est un élément relié à la base.

5. Ébauche selon la revendication 4, où le bord est un bord circonférentiel.

6. Ébauche selon la revendication 4 ou 5, où l'élément relié à la base est un adaptateur.

7. Ébauche selon l'une des revendications 1 à 6, où ladite au moins une région a une géométrie choisie dans le groupe consistant en une forme cubique, cylindrique, conique ou en forme de faux.

8. Ébauche selon l'une des revendications 1 à 7, où la base a une épaisseur B où B ≤ 10 mm.

9. Ébauche selon la revendication 8, où B ≤ 5 mm.

10. Ébauche selon la revendication 9, où 1,5 mm ≤ B ≤ 4 mm.

11. Ébauche selon l'une des revendications 1 à 10, où le rapport entre l'épaisseur B de la base et la hauteur H de la région faisant saillie au-dessus de la base est de 1:15 ≤ B: H ≤ 1:1.

12. Ébauche selon la revendication 11, où 1:10 ≤ B: H ≤ 1:6.

13. Ébauche selon l'une des revendications 1 à 12, où une pluralité de régions ayant des géométries différentes font saillie au-dessus de la base.

14. Ébauche selon l'une des revendications 1 à 13, où les régions ont des dimensions pour la fabrication d'une armature dentaire, d'une couronne, d'une couronne partielle, d'un pont, d'une arcade dentaire, d'une coiffe, d'une facette, d'un implant, d'une construction à broches, d'un inlay et/ou d'un onlay.

15. Ébauche selon l'une des revendications 1 à 14, où l'ébauche et/ou ladite au moins une région comprend ou contient un matériau choisi dans le groupe constitué d'un matériau céramique, d'un matériau métallique, d'un matériau organique, d'un matériau composite ou d'une matière plastique renforcée de fibre de verre.

16. Ébauche selon la revendication 15, où le matériau céramique est du dioxyde de zirconium, de la vitrocéramique ou de la céramique de feldspath ; ou le matériau métallique est du titane ou un alliage de CoCr ; ou le matériau organique est un matériau thermoplastique.

17. Ébauche selon la revendication 16, où le matériau thermoplastique est du PMMA ou du PEEK.

18. Ébauche selon l'une des revendications 1 à 17, où ladite au moins une région faisant saillie au-dessus de la base comprend des sections de différentes compositions de matériaux.

19. Ébauche selon l'une des revendications 1 à 17, où ladite au moins une région faisant saillie au-dessus de la base et la base comprennent des sections de différentes compositions de matériaux.

20. Ébauche selon la revendication 18 ou 19, où les sections de différentes compositions de matériaux sont des sections de matériaux céramiques de différentes compositions.

21. Procédé de fabrication d'au moins un corps moulé par usinage par enlèvement de matière d'une région (14, 16, 18) faisant saillie au-dessus de la base (12) d'une ébauche (10) telle que définie dans l'une des revendications 1 à 20,
où l'usinage commence par l'enlèvement de matière d'une surface circonférentielle de la région, où les régions sont séparées par une section de la base.

22. Procédé selon la revendication 21, où ledit au moins un corps moulé est une restauration dentaire ou une partie de celle-ci.

23. Procédé selon la revendication 21 ou 22, où l'usinage est effectué à l'aide d'un outil de fraisage ou de meulage ayant un axe de rotation et où, au moins au début de l'enlèvement de matière, il y a un mouvement relatif entre l'outil de fraisage ou de meulage et une région transversale à l'axe de rotation.

24. Procédé selon la revendication 23, où le mouvement relatif s'effectue entre l'outil de fraisage ou de meulage et une région perpendiculaire à l'axe de rotation.

25. Procédé selon l'une des revendications 21 à 24, où l'ébauche est fabriquée selon des méthodes de pressage, de moulage, de procédés additifs, de formage ou de fabrication mécanique.
